# EUROPÄISCHE PATENTSCHRIFT

(11) **EP 3 016 819 B1**
(45) Veröffentlichungstag und Bekanntmachung des Hinweises auf die Patenterteilung: **27.03.2019**
(21) Anmeldenummer: 14718977.3
(22) Anmeldetag: 22.04.2014
(51) Int. Cl.: B60N 2/90, B60N 3/06, B60N 2/42, B60N 2/01

(54) **SITZ UND DEREN VERWENDUNG IN EINEM GEPANZERTEN FAHRZEUG**
SEAT AND USE THEREOF IN AN ARMORED VEHICLE
SIÈGE ET SON UTILISATION DANS UN VÉHICULE BLINDÉ

(30) Priorität: 23.04.2013 DE 102013006938
(43) Veröffentlichungstag der Anmeldung: 11.05.2016
(73) Patentinhaber: Rheinmetall MAN Military Vehicles GmbH, 80995 München (DE)
(72) Erfinder: ZERR, Viktor, 34253 Lohfelden (DE); WEIBER, Andreas, 56220 Bassenheim (DE); WEIBERT, Alex, 37235 Hessisch Lichtenau (DE)
(74) Vertreter: Horn Kleimann Waitzhofer Patentanwälte PartG mbB
(86) Internationale Anmeldenummer: PCT/EP2014/058135
(87) Internationale Veröffentlichungsnummer: WO 2014/173895

(56) Entgegenhaltungen:
- EP-A2- 1 593 542
- WO-A1-01/54941
- WO-A1-2014/052534
- WO-A2-2007/060405

## Beschreibung

Die Erfindung betrifft einen Sitz für ein insbesondere gepanzertes Fahrzeug. Dieser weist in der bevorzugten Ausführungsform zum Schutz gegen Landminen ein vom Fahrzeugboden des jeweiligen Fahrzeuges entkoppelbares Sitzgestell mit einer Sitzfläche auf, an bzw. unter der eine von einer eingeklappten in eine ausgeklappte Position schwenkbare Fußstütz-Einrichtung angeordnet ist. Die Erfindung bezieht sich ferner auf eine Verwendung mehrerer derartiger Sitze in einem insbesondere gepanzerten Fahrzeug mit mindestens zwei gegenüberliegenden, quer und/oder längs zur Fahrtrichtung angeordneten Sitzreihen, d.h. mit einem Fahrzeug, das derartige Sitze umfasst.
Um zu vermeiden, dass beim Überfahren von Landminen die bei der Explosion auftretenden Beschleunigungskräfte zu schweren inneren Verletzungen der Insassen führen, ist es beispielsweise aus der EP 1 293 747 A2 bekannt, zum Schutz der Insassen oberhalb des Fahrzeugbodens einen Zwischenboden in das jeweilige Fahrzeug einzubauen. Dabei wird üblicherweise der Zwischenboden an den Seitenwänden oder an dem Dach des jeweiligen Fahrzeuginnenraumes befestigt, so dass bei der Explosion einer Landmine der Zwischenboden mechanisch von dem Fahrzeugboden entkoppelt ist und dadurch die Wirkung der Minenexplosion auf die auf dem Zwischenboden sich fußseitig abstützenden Besatzungsmitglieder wesentlich geringer ist, als wenn sich ihre Füße direkt auf dem Fahrzeugboden befinden würden.
Aus der EP 1 593 542 B1 ist ferner bekannt, zum Schutz der Insassen gegen Landminen die Sitzgestelle des jeweiligen gepanzerten Fahrzeuges an dem Fahrzeugdach zu befestigen, wobei der Sitz an einer oberen Aufhängung befestigt ist und einen Sitzbezug sowie ein Rückhaltesystem aufweist. Die Aufhängung ist als Aufhängungsgestänge ausgebildet, das vom Fahrzeugboden vollkommen entkoppelt ist. Zur Vermeidung von Fuß- und Beinverletzungen sind die Sitzgestelle jeweils mit einer klappbaren, bügelförmigen Fußstütze verbunden. Diese Fußstützen sind allerdings derart unterhalb der Sitzfläche des Sitzgestelles angeordnet, dass bei zwei gegenüberliegenden, quer zur Fahrtrichtung angeordneten Sitzreihen, der jeweilige Insasse nicht die unter seiner Sitzfläche befindliche Fußstütze nutzen kann, sondern die Fußstütze des gegenüberliegenden Sitzes benutzen muss.

Eine derartige Anordnung der Fußstützen besitzt den Vorteil, dass die Beine der Insassen trotz der beengten Innenräume der Fahrzeuge weiter ausgestreckt werden können, als bei bekannten Sitzanordnungen, bei denen die dem jeweiligen Sitz zugeordneten Fußstützen von dem auf diesem Sitz befindlichen Insassen benutzt werden. Denn im letzteren Fall reichen die bügelförmig ausgebildeten Fußstützen in der Regel nur bis zur Mitte des Zwischenraumes zwischen den gegenüberliegenden Sitzreihen und berühren sich dort, so dass sich sehr spitze und ergonomisch ungünstige Winkel zwischen Unter- und Oberschenkel des jeweiligen Insassen ergeben.

Allerdings besitzt die in der EP 1 593 542 B1 offenbarte U-förmige Fußstützenanordnung unter anderem den Nachteil, dass der jeweils gegenüberliegende Sitz, der in der Regel aufgrund der beengten Platzverhältnisse klappbar ist, sowie die gegenüberliegende Fußstütze heruntergeklappt sein muss, auch wenn dieser Sitz nicht benutzt wird. Des Weiteren hat sich als nachteilig erwiesen, dass die Knie des einen Insassen zwischen die Knie des Gegenübers gestellt werden müssen. Das wiederum bewirkt, dass die Fußstützen asymmetrisch aufgebaut und am Sitz befestigt werden müssen. Für das Klappen derartiger Fußstützen und der damit ausgeführten Sitze ist ein weiterer Bauraum freizuhalten. In Fällen, wo es keinen gegenüberliegenden Sitz gibt, sind zudem Sonderlösungen notwendig.

Die WO 2007/060405 A2 zeigt einen Sitz für ein gepanzertes Fahrzeug. Der Sitz umfasst eine feststehende U-förmige Fußstütze, die sich vor eine Sitzfläche des Sitzes erstreckt.

Die WO 01/54941 A1 beschreibt einen Fahrzeugsitz für Flug- und Kraftfahrzeuge mit einer Rückenlehne und einem Sitzteil, das von einem mit einem Fahrzeugboden verbindbaren Sitzrahmengestell gehalten ist, mit mindestens einem Tragarm, der an seinem einen freien Ende schwenkbar eine kombinierte Fuß- und Beinstütze als jeweilige Flächen eines Abstützteils aufweist. Der jeweilige Tragarm ist mit seinem anderen freien Ende am Sitzrahmengestell und schwenkbar und in vorgebbaren Stellungen verrastbar angelenkt, wobei die Fuß- und die Beinstütze auf jeweils gegenüberliegenden Flächen des Abstützteils angeordnet sind.
Die EP 1 593 542 A2 zeigt einen Sitz für ein gepanzertes Fahrzeug zum Schutz gegen Landminen. Der Sitz ist an einer oberen Aufhängung befestigt und weist einen Sitzbezug sowie ein Rückhaltesystem auf. Die Aufhängung ist als Aufhängungsgestänge ausgebildet, das vom Fahrzeugboden vollkommen entkoppelt ist.

Die gemäß Artikel 54 (3) EPÜ zum Stand der Technik gehörende WO 2014/052534 A1 beschreibt einen Sitz mit einer klappbaren Fußstütze. Die Fußstütze weist zwei beidseits an der Fußstütze angebrachte Fußauflagen auf.
Der Erfindung liegt die Aufgabe zugrunde, einen Sitz mit einer Fußstütz-Einrichtung zu offenbaren, der insbesondere bei gepanzerten Fahrzeugen mit insbesondere quer zur Fahrtrichtung angeordneten, gegenüberliegenden Sitzreihen verwendbar ist, und bei dem der den jeweiligen Sitz benutzende Insasse die dem Sitz zugeordnete Fußstütze benutzen und dabei seine Beine weiter ausstrecken kann, als dieses bei vergleichbaren bekannten Sitzen möglich ist. Außerdem soll eine Verwendung derartiger erfindungsgemäßer Sitze offenbart werden.

Diese Aufgabe wird erfindungsgemäß hinsichtlich des Sitzes durch die Merkmale des Anspruchs 1 bzw. 2 und hinsichtlich seiner Verwendung durch die Merkmale des Anspruchs 9 gelöst. Weitere, besonders vorteilhafte Ausgestaltungen der Erfindung offenbaren die Unteransprüche.
Die Erfindung beruht im Wesentlichen auf dem Gedanken, dass eine Fußstütze am eigenen Sitz vorteilhafter ist als an einem fremden. Dieser Grundgedanke wird dadurch umgesetzt, dass als Fußstütz-Einrichtung nicht, wie bei bekannten Sitzen, ein durchgehender (U-förmiger) Bügel verwendet wird. Als vorteilhaft hat sich gezeigt, wenn die Fußstütz-Einrichtung bevorzugt zwei separate, seitlich voneinander beabstandete Fußstützen besitzt. Dabei ist der Abstand der beiden Fußstützen des jeweiligen Sitzes der einen Sitzreihe derart gewählt, dass eine der beiden Fußstützen des gegenüberliegenden Sitzes der anderen Sitzreihe beim Ausklappen in den entsprechenden Zwischenraum zwischen diesen beiden Fußstützen schwenkbar ist. Alternativ ist auch eine einseitig am Sitz eingebundene Fußstütze verwendbar.
Vorzugsweise weisen die beiden Fußstützen der jeweiligen Fußstütz-Einrichtung im Wesentlichen die gleichen Abmessungen auf, so dass der seitliche Abstand der beiden Fußstützen mindestens der Breite einer Fußstütze entsprechen muss.
Bei einer bevorzugten Ausführungsform umfassen die beiden Fußstützen jeweils ein stangenförmiges Element, an dessen ersten (unteren) Ende eine nach außen gerichtete Fußauflage angeordnet ist. An dem zweiten (oberen) Ende des stangenförmigen Elementes sind die beiden Fußstützen über eine schwenkbare Welle miteinander verbunden, wobei die Welle mit einem Klappmechanismus zusammenwirkt, der die Welle und damit auch die beiden Fußstützen in vorgebbaren Positionen arretiert.
Möglich ist auch eine nach innen gerichtete Fußauflage, wobei dann der Abstand der beiden Fußstützen zueinander größer sein sollte, als bei einer nach außen gerichteten Fußauflage.
Nicht ausgeschlossen ist auch, wie bereits erwähnt, die Verwendung einer einzigen Fußstütze, an der eine jeweils nach rechts oder nach links weisende Fußauflage befestigt ist.

Die Fußstütze würde entsprechend der Anordnung der Fußauflage rechts oder links am Sitz eingebunden sein. Die Ausrichtung der Fußauflage sollte bei allen Sitzen gleich sein.

Eine versetzte Anordnung der (linken und rechten) Sitzreihen zueinander stellt prinzipiell eine bevorzuge Variante der unterschiedlichen Ausführungsformen dar. Dazu werden mehrerer derartig ausgebildete Sitze zu mindestens zwei gegenüberliegenden, quer und / oder längs zur Fahrtrichtung angeordneten Sitzreihen zusammengefasst und die Sitze der jeweils gegenüberliegenden Sitzreihen derart versetzt zueinander angeordnet sind, dass die ausgeklappten Fußstützen der Sitze der einen Sitzreihe zwischen die ausgeklappten Fußstützen der Sitze der gegenüberliegenden Sitzreihe ragen.

Der Klappmechanismus umfasst vorzugsweise einen an dem Sitzgestell angeordneten, mittels eines Auslösehebels gegen den Druck eines Rückstellelementes verschiebbaren Arretierbolzen und einen auf der Weite kraft- oder formschlüssig angeordneten Rastring, der umfangseitig mindestens zwei die Endstellungen der Fußstützen definierende Rastöffnungen enthält, in die der Arretierbolzen bei Erreichen der jeweiligen Endstellung eingreift.

Die beiden Enden der Welle sind vorteilhafter Weise schwenkbar in Lagerböcken gelagert, die kraft- oder formschlüssig mit dem Sitzgestell verbunden sind.

Weitere Einzelheiten und Vorteile der Erfindung ergeben sich aus den folgenden, anhand von Figuren erläuterten Ausführungsbeispielen. Es zeigen:
- Fig. 1: eine schematische Seitenansicht zweier gegenüberliegender, erfindungsgemäßer Sitze mit ausgeklappten Fußstützen;
- Fig. 2: eine schematische Draufsicht auf zwei, quer zur Fahrtrichtung angeordnete, gegenüberliegende Sitzreihen erfindungsgemäßer Sitze mit ausgeklappten Fußstützen;
- Fig. 3: die perspektivische Ansicht einer Fußstütz-Einrichtung mit ausgeklappten Fußstützen schräg von vorne gesehen,
- Fig. 4: die in Fig. 3 dargestellte Fußstütz-Einrichtung von unten gesehen,
- Fig. 5: eine schematische Darstellung auf zwei, quer zur Fahrtrichtung angeordneten, gegenüberliegende Sitzreihen mit ausgeklappten einseitigen Fußstützen.

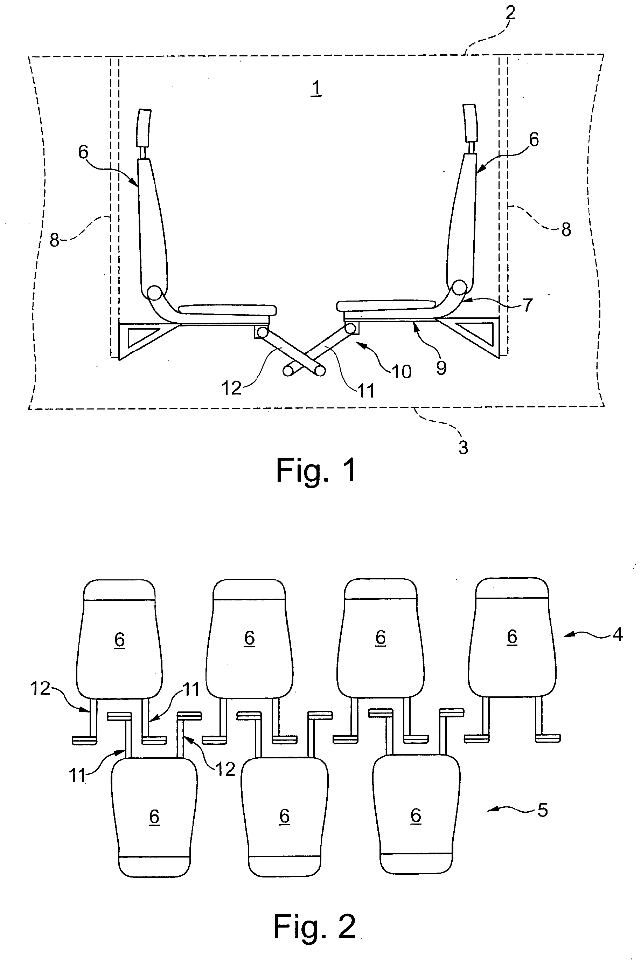

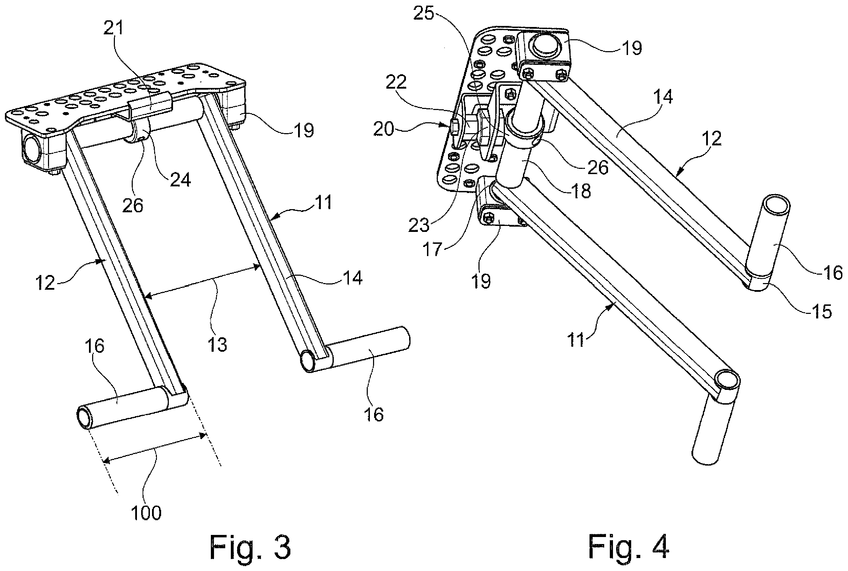

In Fig. 1 ist mit 1 der Innenraum eines gepanzerten Fahrzeuges gestrichelt dargestellt. Der Innenraum 1 wird oberseitig von dem Fahrzeugdach 2 und unterseitig von dem Fahrzeugboden 3 (bei dem es sich allerdings auch um einen Zwischenboden etc. handeln kann) begrenzt.
In dem Innenraum 1 befinden sich wenigstens zwei gegenüberliegende, quer zur Fahrtrichtung angeordnete Sitzreihen 4 und 5 (vgl. auch Fig. 2), wobei in Fig.1 lediglich zwei der den Sitzreihen 4 und 5 zugeordneten Sitze 6 dargestellt sind.
Das Sitzgestell 7 jedes der Sitze 6 ist über ein Aufhängungsgestänge 8 oder dergleichen mit dem Fahrzeugdach 2 verbunden, so dass die Sitze 6 vom Fahrzeugboden 3 mechanisch weitgehend entkoppelt sind.
An der Sitzfläche 9 jedes der Sitze 6 ist eine, in ihrer ausgeklappten Position befindliche Fußstütz-Einrichtung 10 angeordnet. Diese umfasst zwei sich mindestens teilweise vor die Sitzfläche 9 erstreckende, voneinander beabstandete Fußstützen 11, 12. Dabei sollte der seitliche Abstand 13 (Fig. 3) der beiden Fußstützen 11, 12 des jeweiligen Sitzes 6 größer sein als die Breite 100 einer Fußstütze 11, 12, so dass bei versetzt angeordneten, gegenüberliegenden Sitzreihen die ausgeklappten Fußstützen 11, 12 der Sitze 6 der Sitzreihe 4 zwischen die ausgeklappten Fußstützen 11, 12 der Sitze 6 der gegenüberliegenden Sitzreihe 5 ragen (Fig. 2).
Die beiden Fußstützen 11, 12 jedes Sitzes 6 umfassen jeweils ein stangenförmiges Element 14 (Fig. 3 und 4), an dessen dem Fahrzeugboden 3 zugewandten unteren Ende 15 eine nach außen gerichtete Fußauflage 16 angeordnet ist. Diese können auch klappbar an den Elementen 14 eingebunden sein. Die dem der Sitzfläche 9 zugewandten oberen Ende 17 der stangenförmigen Elemente 14 der Fußstützen 11, 12 sind über eine Welle 18 miteinander verbunden, welche in entsprechenden Lagerböcken 19 schwenkbar gelagert ist. Außerdem wirkt die Welle 18 mit einem Klappmechanismus 20 zusammen, der die Welle 18, und damit auch die beiden Fußstützen 11, 12, in vorgebbaren Positionen arretiert.

Hierzu umfasst der Klappmechanismus 20 einen an dem Sitzgestell 7 angeordneten, mittels eines Auslösehebels 21 gegen den Druck eines Rückstellelementes (hier eine Gummifeder) 22 verschiebbaren Arretierbolzen 23 und einen auf der Welle 18 kraftschlüssig angeordneten Rastring 24. Der Rastring 24 enthält umfangseitig zwei, die Endstellungen der Fußstützen 11, 12 definierende Rastöffnungen 25, 26, in welche der Arretierbolzen 23 eingreift.

Um die Fußstützen 11, 12 von ihrer ausgeklappten Position in eine eingeklappte Position zu verschwenken, wird der Auslösehebel 21 in Richtung auf die Gummifeder 22 gedrückt und nimmt dabei den Arretierbolzen 23 mit. Dadurch wird der Arretierbolzen 23 aus der ersten Rastöffnung 25 des Rastringes 24 herausgedrückt. Anschließend können die Fußstützen 11, 12 in ihre eingeklappte Position geschwenkt werden, wobei der Arretierbolzen 23 so lange auf der Oberfläche des Rastringes 24 entlang gleitet, bis die zweite Rastöffnung 26 erreicht ist und die Gummifeder 22 den Arretierbolzen 23 in die zweite Rastöffnung 26 hineindrückt.

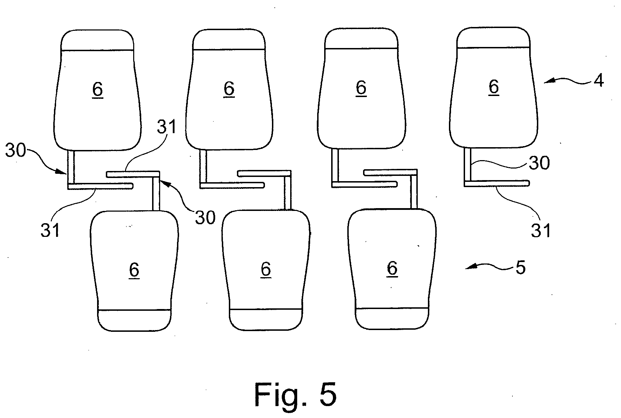

Fig. 5 zeigt eine Alternativlösung im Rahmen des erfinderischen Gedankens. Hier ist nur einseitig am Sitz 6 eine Fußstütze 30 mit einer daran nach links weisenden Fußauflage 31 angebracht. Die Funktionsweise des Klappens der Fußstütze 30 als auch der Fußauflage 31 etc. ist wie beschrieben.

### Bezugszeichenliste

- 1: Innenraum
- 2: Fahrzeugdach
- 3: Fahrzeugboden
- 4,5: Sitzreihen
- 6: Sitz
- 7: Sitzgestell
- 8: Aufhängungsgestänge
- 9: Sitzfläche
- 10: Fußstütz-Einrichtung
- 11,12: Fußstützen
- 13: Abstand
- 14: stangenförmiges Element
- 15: unteres Ende
- 16: Fußauflage
- 17: oberes Ende
- 18: Welle
- 19: Lagerbock
- 20: Klappmechanismus
- 21: Auslösehebel
- 22: Rückstellelement, Gummifeder
- 23: Arretierbolzen
- 24: Rastring
- 25, 26: Rastöffnungen
- 30: Fußstütze
- 31: Fußauflage

- 100: Breite

## Patentansprüche

1. Sitz für ein gepanzertes Fahrzeug mit einem von einem Fahrzeugboden (3) des Fahrzeuges mechanisch entkoppelbaren Sitzgestell (7) und einer Sitzfläche (9), an der eine von einer eingeklappten in eine ausgeklappte Position schwenkbare Fußstütz-Einrichtung (10) angeordnet ist, wobei die Fußstütz-Einrichtung (10) eine sich mindestens teilweise vor die Sitzfläche (9) erstreckende Fußstütze (30) umfasst, an der eine nur nach rechts oder nur nach links weisende Fußauflage (31) angebracht ist und die Fußstütze (30) seitlich rechts oder links unter der Sitzfläche (6) angeordnet ist.

2. Sitz für ein gepanzertes Fahrzeug mit einem von einem Fahrzeugboden (3) des Fahrzeuges mechanisch entkoppelbaren Sitzgestell (7) und einer Sitzfläche (9), an der eine von einer eingeklappten in eine ausgeklappte Position schwenkbare Fußstütz-Einrichtung (10) angeordnet ist, wobei die Fußstütz-Einrichtung (10) zwei sich mindestens teilweise vor die Sitzfläche (9) erstreckende, voneinander beabstandete Fußstützen (11, 12) umfasst, und wobei ein seitlicher Abstand (13) der beiden Fußstützen (11, 12) mindestens einer Breite (100) einer der beiden Fußstützen (11, 12) entspricht.

3. Sitz nach Anspruch 2, **dadurch gekennzeichnet, dass** die beiden Fußstützen (11, 12) jeweils ein stangenförmiges Element (14) umfassen, an dessen jeweiligem unteren Ende (15) eine Fußauflage (16) angeordnet ist.

4. Sitz nach Anspruch 3, **dadurch gekennzeichnet, dass** die Fußauflagen (16) nach außen gerichtet sind.

5. Sitz nach Anspruch 3, **dadurch gekennzeichnet, dass** die Fußauflagen (16) nach innen gerichtet sind.

6. Sitz nach einem der Ansprüche 3 bis 5, **dadurch gekennzeichnet, dass** obere Enden (17) der stangenförmigen Elemente (14) beider Fußstützen (11, 12) über eine schwenkbare Welle (18) miteinander verbunden sind, wobei die Welle (18) mit einem Klappmechanismus (20) zusammenwirkt, der die Welle (18), und damit auch die beiden Fußstützen (11, 12), in vorgebbaren Positionen arretiert.

7. Sitz nach Anspruch 6, **dadurch gekennzeichnet, dass** der Klappmechanismus (20) einen an dem Sitzgestell (7) angeordneten, mittels eines Auslösehebels (21) gegen den Druck eines Rückstellelementes (22) verschiebbaren Arretierbolzen (23) sowie einen auf der Welle (18) kraft- oder formschlüssig angeordneten Rastring (24) umfasst, der umfangseitig mindestens zwei Endstellungen der Fußstützen (11, 12) definierende Rastöffnungen (25, 26) enthält, in welche der Arretierbolzen (23) bei Erreichen der Endstellungen jeweils eingreift.

8. Sitz nach Anspruch 6 oder 7, **dadurch gekennzeichnet, dass** beide Enden der Welle (18) schwenkbar in Lagerböcken (19) gelagert sind, die kraft- oder formschlüssig mit dem Sitzgestell (7) verbunden sind.

9. Fahrzeug mit mehreren Sitzen (6) nach einem der Ansprüche 1 bis 8, insbesondere gepanzertes Fahrzeug, und mit mindestens zwei gegenüberliegenden, quer und/oder längs zu einer Fahrtrichtung angeordneten Sitzreihen (4, 5), wobei die Sitze (6) jeweils gegenüberliegender Sitzreihen (4, 5) derart versetzt zueinander angeordnet sind, dass die ausgeklappten Fußstützen (11, 12, 30) der Sitze (6) der einen Sitzreihe (4) zwischen die ausgeklappten Fußstützen (11, 12, 30) der Sitze (6) der gegenüberliegenden Sitzreihe (5) ragen.

## Claims

1. Seat for an armored vehicle having a seat frame (7) which can be mechanically decoupled from a vehicle floor (3) of the vehicle and a seat surface (9) on which a foot support device (10) is arranged which is pivotable from a folded position to an unfolded position, wherein the foot support device (10) comprises a foot support (30) extending at least partially in front of the seat surface (9) on which a foot rest (31) is attached which only points to the right or only points to the left and the foot support (30) is arranged laterally to the right or to the left under the seat surface (6).

2. Seat for an armored vehicle having a seat frame (7) which can be mechanically decoupled from a vehicle floor (3) of the vehicle and a seat surface (9) on which a foot support device (10) is arranged which is pivotable from a folded position to an unfolded position, wherein the foot support device (10) comprises two foot supports (11, 12) which extend at least partially in front of the seat surface (9) and which are spaced apart from each other, and wherein a lateral distance (13) of the two foot supports (11, 12) corresponds to at least a width (100) of one of the two foot supports (11, 12).

3. Seat according to claim 2,
**characterized in that**
the two foot supports (11, 12) respectively comprising a rod-shaped element (14), on whose respective lower end (15) a foot rest (16) is arranged.

4. Seat according to claim 3,
**characterized in that**
the foot rests (16) are directed outwards.

5. Seat according to claim 3,
**characterized in that**
the foot rests (16) are directed inwards.

6. Seat according to one of claims 3 to 5,
**characterized in that**
upper ends (17) of the rod-shaped elements (14) of both foot supports (11, 12) are connected to each other via a pivotable shaft (18), wherein the shaft (18) interacts with a folding mechanism (20) which locks the shaft (18) and thus also the two foot supports (11, 12) in predetermined positions.

7. Seat according to claim 6,
**characterized in that**
the folding mechanism (20) comprises a locking bolt (23) which is arranged on the seat frame (7) and which is slidable by means of an adjusting lever (21) against the pressure of a restoring element (22) as well as a latching ring (24) which is arranged on the shaft (18) in a force- or form-locking manner and that contains, on the circumferential side, at least two latching openings (25, 26) which define the end positions of the foot supports (11, 12) and in which the locking bolt (23) respectively engages in each case when the end positions are reached.

8. Seat according to claim 6 or 7,
**characterized in that**
both ends of the shaft (18) are pivotably mounted in bearing blocks (19) which are connected to the seat frame (7) in a force- or form-locking manner.

9. Vehicle having a plurality of seats (6) according to one of claims 1 to 8,
in particular an armored vehicle, and having at least two seat rows (4, 5) which are arranged opposing, transversely and/or longitudinally to a driving direction, wherein the seats (6) of respective opposing seat rows (4, 5) are arranged offset to each another in such a way that the folded-out foot supports (11, 12, 30) of the seats (6) of the one row of seats (4) project between the folded-out foot supports (11, 12, 30) of the seats (6) of the opposing row of seats (5).

## Revendications

1. Siège destiné à un véhicule blindé comportant une armature (7) de siège qui peut être désaccouplée mécaniquement d'un plancher (3) de véhicule du véhicule et une surface (9) de siège sur laquelle est disposé un dispositif (10) de support de pieds qui peut pivoter d'une position pliée à une position dépliée, dans lequel le dispositif (10) de support de pieds comprend un support de pieds (30) s'étendant au moins partiellement à l'avant de la surface (9) de siège sur lequel est fixé un repose-pieds (31) qui ne pointe que vers la droite ou qui ne pointe que vers la gauche, et le support de pieds (30) est disposé latéralement vers la droite ou vers la gauche sous la surface de siège (6).

2. Siège destiné à un véhicule blindé comportant une armature (7) de siège qui peut être désaccouplée mécaniquement d'un plancher (3) de véhicule du véhicule et une surface (9) de siège sur laquelle est disposé un dispositif (10) de support de pieds qui peut pivoter d'une position pliée à une position dépliée, dans lequel le dispositif (10) de support de pieds comprend deux supports de pieds (11, 12) qui s'étendent au moins partiellement à l'avant de la surface (9) de siège et qui sont espacés l'un de l'autre, et dans lequel une distance latérale (13) entre les deux supports de pieds (11, 12) correspond à au moins une largeur (100) de l'un des deux supports de pieds (11, 12).

3. Siège selon la revendication 2,
**caractérisé en ce que**
les deux supports de pieds (11, 12) comprennent respectivement un élément en forme de tige (14), sur lequel est disposée une extrémité inférieure respective (15) d'un repose-pieds (16).

4. Siège selon la revendication 3,
**caractérisé en ce que**
les repose-pieds (16) sont orientés vers l'extérieur.

5. Siège selon la revendication 3,
**caractérisé en ce que**
les repose-pieds (16) sont orientés vers l'intérieur.

6. Siège selon l'une des revendications 3 à 5,
**caractérisé en ce que**
des extrémités supérieures (17) des éléments en forme de tige (14) des deux supports de pieds (11, 12) sont reliées l'une à l'autre par le biais d'un axe pouvant pivoter (18), dans lequel l'axe (18) interagit avec un mécanisme de pliage (20) qui verrouille l'axe (18) et ainsi également les deux supports de pieds (11, 12) dans des positions prédéterminées.

7. Siège selon la revendication 6,
**caractérisé en ce que**
le mécanisme de pliage (20) comprend un verrou (23) qui est disposé sur l'armature (7) de siège et qui peut coulisser au moyen d'un levier de réglage (21) contre la pression d'un élément de rappel (22) de même qu'une bague de verrouillage (24) qui est disposée sur l'axe (18) d'une manière à verrouillage par force ou par forme et qui contient, sur le côté circonférentiel, au moins deux ouvertures de verrouillage (25, 26) qui définissent les positions de fin course des supports de pieds (11, 12) et avec lesquelles le verrou (23) vient en prise respectivement dans chaque cas dans lesquels les positions de fin de course sont atteintes.

8. Siège selon la revendication 6 ou la revendication 7,
**caractérisé en ce que**
les deux extrémités de l'axe (18) sont montées pivotantes dans des blocs de palier (19) qui sont reliés à l'armature (7) de siège d'une manière à verrouillage par force ou par forme.

9. Véhicule comportant une pluralité de sièges (6) selon l'une des revendications 1 à 8, en particulier un véhicule blindé, et comportant au moins deux rangées (4, 5) de sièges qui sont disposées l'une en regard de l'autre, transversalement et/ou longitudinalement à une direction de circulation, dans lequel les sièges (6) de rangées (4, 5) de sièges en regard l'une de l'autre sont disposés décalés les uns des autres d'une manière telle que les supports de pieds dépliés (11, 12, 30) des sièges (6) de la première rangée (4) de sièges font saillie entre les supports de pieds dépliés (11, 12, 30) des sièges (6) de la rangée de sièges (5) opposée (5).
